Europäisches Patentamt

European Patent Office

Office européen des brevets

(11) Publication number : **0 518 646 A1**

# EUROPEAN PATENT APPLICATION

(21) Application number : 92305329.2

(22) Date of filing : 10.06.92

(51) Int. Cl.⁵ : **C08J 7/04,** C09D 7/12,
C09D 133/00

(30) Priority : 14.06.91 GB 9112843

(43) Date of publication of application :
16.12.92 Bulletin 92/51

(84) Designated Contracting States :
AT BE CH DE DK ES FR GB IT LI LU NL SE

(71) Applicant : IMPERIAL CHEMICAL
INDUSTRIES PLC
Imperial Chemical House, Millbank
London SW1P 3JF (GB)

(72) Inventor : Harrison, Anthony Garry
25 Greenacre Close, Great Ayton
Middlesbrough, Cleveland TS9 6PG (GB)
Inventor : Meredith, William Neville Eugen
12 Merlay Close, Yarm
Stockton on Tees, Cleveland TS15 9TE (GB)
Inventor : Higgins, David Edward
Whiteley Side, Commondale
Whitby, North Yorkshire YO21 2HJ (GB)

(74) Representative : Rhind, John Lessels et al
ICI Group Patents Services Dept. Po Box 6
Shire Park Bessemer Road
Welwyn Garden City Herts, AL7 1HD (GB)

(54) **Polymeric film.**

(57)    A polymeric film comprises a substrate layer of polymeric arterial, an acidic primer layer and a coating layer comprising a layer mineral. The acidic primer layer is preferably formed from a composition comprising a polymer containing at least one free functional acid group and/or an additional acidic component. The layer mineral is preferably vermiculite. The polymeric film exhibits improved oxygen barrier properties and is particularly suitable for use as a packaging film.

EP 0 518 646 A1

EP 0 518 646 A1

This invention relates to a polymeric film, and in particular to a multilayer polymeric film.

Polymeric films comprising layer minerals are known. The layer minerals have been used to impart a variety of properties to polymeric films, such as flame retardancy, antistatic property and gas barrier, as disclosed, for example in Japanese Unexamined Patent Application No 62-181144, EP-A-235926 and US-A-3499820. Unfortunately the aforementioned films often suffer from inadequate adhesion of the layer mineral coating to the polymeric substrate.

Japanese Unexamined Patent Application No 63-233836 discloses a film having steam and gas barrier properties comprising a laminar silicate and a vinylidene chloride resin. However, there is presently a commercial requirement for films exhibiting improved gas, particularly oxygen, barrier properties.

We have now devised a polymeric film which exhibits improved oxygen barrier properties.

Accordingly, the present invention provides a polymeric film comprising a substrate layer of polymeric arterial having on at least one surface thereof an acidic primer layer, the remote surface of said primer layer having thereon a coating layer comprising a layer mineral.

The invention also provides a method of producing a polymeric film by forming a substrate layer of polymeric arterial, applying to at least one surface thereof an acidic primer layer, and applying to the remote surface of said primer layer a coating layer comprising a layer mineral.

A substrate for use in the production of a polymeric film according to the invention suitably comprises any polymeric arterial capable of forming a self-supporting opaque, or preferably transparent, film or sheet.

By a "self-supporting film or sheet" is meant a film or sheet capable of independent existence in the absence of a supporting base.

The substrate of a film according to the invention may be formed from any film-forming, polymeric arterial. Suitable thermoplastics, synthetic, materials include a homopolymer or a copolymer of a 1-olefine, such as ethylene, propylene or butene-1, especially polypropylene, a polyamide, a polycarbonate, and particularly a synthetic linear polyester which may be obtained by condensing one or more dicarboxylic acids or their lower alkyl (up to 6 carbon atoms) diesters, eg terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid) with one or more glycols, particularly an aliphatic glycol, eg ethylene glycol, 1,3-propanediol, 1,4-butanediol, neopentyl glycol and 1,4-cyclohexanedimethanol. A polyethylene terephthalate film is particularly preferred, especially such a film which has been biaxially oriented by sequential stretching in two mutually perpendicular directions, typically at a temperature in the range 70 to 125°C, and preferably heat set, typically at a temperature in the range 150 to 250°C, for example - as described in British patent 838,708.

The substrate may also comprise a polyarylether or thio analogue thereof, particularly a polyaryletherketone, polyarylethersulphone, polyaryletheretherketone, polyaryletherethersulphone, or a copolymer or thioanalogue thereof. Examples of these polymers are disclosed in EP-A-1879, EP-A-184458 and US-A-4008203, particularly suitable materials being those sold by ICI PLC under the Registered Trade Mark STABAR. The substrate may comprise a poly(arylene sulphide), particularly poly-p-phenylene sulphide or copolymers thereof. Blends of the aforementioned polymers may also be employed.

Suitable thermoset resin substrate materials include addition - polymerisation resins - such as acrylics, vinyls, bis-maleimides and unsaturated polyesters, formaldehyde condensate resins - such as condensates with urea, melamine or phenols, cyanate resins, functionalised polyesters, polyamides or polyimides.

The polymeric film substrate for production of a film according to the invention may be unoriented, or uniaxially oriented, but is preferably biaxially oriented by drawing in two mutually perpendicular directions in the plane of the film to achieve a satisfactory combination of mechanical and physical properties. Simultaneous biaxial orientation may be effected by extruding a thermoplastics polymeric tube which is subsequently quenched, reheated and then expanded by internal gas pressure to induce transverse orientation, and withdrawn at a rate which will induce longitudinal orientation. Sequential stretching may be effected in a stenter process by extruding the thermoplastics substrate arterial as a flat extrudate which is subsequently stretched first in one direction and then in the other mutually perpendicular direction. Generally, it is preferred to stretch firstly in the longitudinal direction, ie the forward direction through the film stretching machine, and then in the transverse direction. A stretched substrate film may be, and preferably is, dimensionally stabilised by heat-setting under dimensional restraint at a temperature above the glass transition temperature thereof.

The substrate is suitably of a thickness from 6 to 300, particularly from 6 to 100, and especially from 6 to 25 μm.

The primer layer comprises at least one arterial which may be any polymeric resin kown in the art to be capable of forming a continuous, preferably uniform coating, being acidic and/or compatible with an additional acidic component. The polymeric resin of the primer layer preferably comprises at least one free functional acid (for example a pendant carboxyl or sulphonic acid) group, that is a group other than those involved in the poly-

2

merisation reaction by which the polymer is formed, such as acrylic acid, methacrylic acid, maleic acid and itaconic acid. Suitably up to 25%, preferably up to 10%, and especially up to 5% by weight of a monomer containing a free functional acid group may be employed in the polymeric resin component of the primer layer.

The polymeric resin of the primer layer is preferably compatible with, and includes, an additional acidic component, such as sulphuric, nitric, acetic acid or any mineral acid, such as hydrochloric acid, in the primer layer coating composition. The additional acidic component is preferably present in the primer layer coating composition in a concentration range from 0.5 to 15, more preferably 1 to 10, and especially 4 to 8% by weight relative to the polymeric resin. Sulphuric acid is a preferred acidic component.

Suitable polymeric resins for use in the primer layer include:

(a) "aminoplast" resins which can be prepared by the interaction of an amine or amide with an aldehyde, typically an alkoxylated condensation product of melamine and formaldehyde, eg hexamethoxymethylmelamine trimethoxy trimethylol melamine formaldehyde;

(b) homopolyesters, such as polyethylene terephthlate;

(c) copolyesters, particularly those derived from a sulpho derivative of a dicarboxylic acid such as sulphoterephthalic acid and/or sulphoisophthalic acid;

(d) copolymers of styrene with one or more ethylenically unsaturated comonomers such as maleic anhydride or itaconic acid, especially the copolymers described in GB-A-1540067;

(e) copolymers of acrylic acid and/or methacrylic acid and/or their lower alkyl (up to 6 carbon atoms) esters, eg copolymers of ethyl acrylate and methyl methacrylate, copolymers of methyl methacrylate/butyl acrylate/acrylic acid typically in the molar proportions 55/27/18% and 36/24/40%;

(f) copolymers of styrene/acrylamide, particularly of the type described in GB-A-1174328 and GB-A-1134876;

(g) functionalised polyolefins, especially maleinised polybutadiene;

(h) cellulosic materials such as nitrocellulose, ethylcellulose and hydroxyethylcellulose; and

(i) polyvinyl alcohol.

A preferred polymeric resin component of the primer layer comprises a copolymer comprising acrylamide and/or a derivative thereof, such as a lower alkoxy, preferably n-butoxy, and/or methacrylamide and/or a derivative thereof, such as a lower alkoxy, preferably n-butoxy, and at least one other ethylenically unsaturated comonomer copolymerisable therewith, including acrylic acid and its esters, preferably alkyl esters, for example methyl acrylate, ethyl acrylate, butyl acrylate, 2-ethyl-hexyl acrylate, isobutyl acrylates, hexyl acrylates and octyl acrylates; methacrylic acid and its esters for example methyl methacrylate, ethyl methacrylate and butyl methacrylate. Other suitable monomers include acrylonitrile, styrene, monomethyl styrene, vinyl toluene, maleic anhydride, and vinyl ethers. Styrene and alkyl acrylates are particularly preferred monomers. Dienes such as butadiene or chloroprene may also be present in the primer layer copolymer.

The primer layer preferably comprises a copolymer derived from up to 90% by weight of styrene, up to 80% by weight of an alkyl acrylate, up to 15% by weight of methacrylic acid, and from 5% to 40% by weight of acrylamide which has been condensed with a solution of formaldehyde in n-butanol containing from 0.2 to 3 equivalents of formaldehyde for each amide group in the copolymer. A particularly preferred copolymer comprises styrene/2-ethyl hexyl acrylate/methacrylic acid/n-butoxymethyl acrylamide in a ratio of 20 to 40/30 to 50/1 to 5/20 to 35 % by weight. GB-A-1174328 and GB-A-1134876 describe suitable methods for the synthesis of the aforementioned primer layer copolymers.

The molecular weight of polymeric resin of the primer layer can vary over a wide range but the weight average molecular weight is preferably within the range 10,000 to 300,000, and more preferably within the range 15,000 to 100,000.

The polymeric resin of the primer layer coating composition is generally water-insoluble. The primer layer composition including the water-insoluble polymer may nevertheless be applied to the polymeric film substrate as an aqueous dispersion or alternatively as a solution in an organic solvent.

The primer layer coating medium may be applied before, during or after the stretching operation. In particular, the coating medium may be applied to the film substrate between the two stages (longitudinal and transverse) of a biaxial stretching operation. Such a sequence of stretching and coating is suitable for the production of a coated linear polyester film substrate, such as a coated polyethylene terephthalate film, which is preferably firstly stretched in the longitudinal direction over a series of rotating rollers, coated, and then stretched transversely in a stenter oven, preferably followed by heat setting.

The primer layer coating composition may be applied to the polymeric film as an aqueous dispersion or solution in an organic solvent by any suitable conventional coating technique such as dip coating, bead coating, reverse roller coating or slot coating.

The primer layer coating medium is preferably applied to an already oriented film substrate, such as a biaxially oriented polyester, particularly polyethylene terephthalate film.

Prior to deposition of the primer layer onto the polymeric substrate, the exposed surface thereof may, if desired, be subjected to a chemical or physical surface-modifying treatment to improve the bond between that surface and the subsequently applied primer or coating layer. A preferred treatment, because of its simplicity and effectiveness, which is particularly suitable for the treatment of a polyolefin substrate, is to subject the exposed surface of the substrate to a high voltage electrical stress accompanied by corona discharge. Alternatively, the substrate may be pretreated with an agent known in the art to have a solvent or swelling action on the substrate polymer. Examples of such agents, which are particularly suitable for the treatment of a polyester substrate, include a halogenated phenol dissolved in a common organic solvent eg a solution of p-chloro-m-cresol, 2,4-dichlorophenol, 2,4,5- or 2,4,6-trichlorophenol or 4-chlororesorcinol in acetone or methanol.

The primer layer is preferably applied to the polymeric substrate at a coat weight within the range 0.1 to 10 mgdm$^{-2}$, especially 1.0 to 6 mgdm$^{-2}$. for films coated on both surfaces, each layer preferably has a coat weight within the preferred range.

Modification of the surface of the primer layer, eg by flame treatment, ion bombardment, electron beam treatment, ultra-violet light treatment or preferably by corona discharge, may improve the adhesion of the subsequently applied coating layer comprising a layer mineral, but may not be essential to the provision of satisfactory adhesion.

The preferred treatment by corona discharge may be effected in air at atmospheric pressure with conventional equipment using a high frequency, high voltage generator, preferably having a power output of from 1 to 20 kw at a potential of 1 to 100 kv. Discharge is conveniently accomplished by passing the film over a dielectric support roller at the discharge station at a linear speed preferably of 1.0 to 500 m per minute. The discharge electrodes may be positioned 0.1 to 10.0 mm from the moving film surface.

The ratio of substrate to primer layer thickness may vary within a wide range, although the thickness of the primer layer preferably should not be less than 0.004% nor greater than 10% of that of the substrate. In practice, the thickness of the primer layer is desirably at least 0.005 μm and preferably should not greatly exceed about 1.0 μm.

The layer mineral component of the coating layer preferably comprises platelets of a film-forming, 2:1 phyllosilicate layer mineral. For information on the composition and structure of phyllosilicate layer minerals, reference can be made to "Clay Minerals: Their Structure, Behaviour & Use", Proceedings of a Royal Society Discussion Meeting, 9 & 10 November 1983, London, The Royal Society, 1984 (particularly pages 222-223, 232-235).

The term "platelets" as used in this specification means tiny particles of the layer mineral obtained by subjecting the mineral to a chemical delaminating process to form an aqueous colloidal dispersion of high aspect ratio particles of the mineral from which a film can be formed.

Preferably, the layer mineral is selected from the group consisting of smectites, preferably hectorite and montmorillonite, and particularly vermiculite.

The term "vermiculite" as used in this specification means all materials known mineralogically and commercially as vermiculite. Vermiculite ore being a naturally-occuring mineral contains a mixture of phases (eg vermiculite, biotite, hydrobiotite etc) and a mixture of interlayer cations (eg Mg$^{2+}$, Ca$^{2+}$, K$^+$). Production of aqueous suspensions or slurries of vermiculite platelets rely on ion exchange (normally incomplete) to generate adequate macroscopic swelling. The swollen, fully-or partially-exchanged vermiculite gel can then be milled to produce a film-forming aqueous suspension of vermiculite platelets. Treatment of vermiculite particles with one or more aqueous solutions of metal (especially alkali metal) salts or alkyl ammonium salts followed by swelling in water and then milling to delaminate the vermiculite is well known and is described for example in GB-A-1016385, GB-A-1119305, GB-A-1585104 and GB-A-1593382, and in US-A-4130687.

Vermiculite is a particularly suitable layer mineral when a coated film exhibiting gas barrier, especially oxygen barrier, is required. A polymeric film according to the invention suitably has an oxygen permeability of less than 50, preferably less than 20, more preferably less than 10, particularly less than 5, and especially less than 1 cc/m$^2$/day.

A preferred embodiment of the invention comprises a coating layer of vermiculite platelets wherein greater than 50%, preferably 55 to 99.9%, more preferably 60 to 99%, and particularly 70 to 95% by number of the platelets have a particle size (by which is meant the size of the maximum width of a platelet) in the range 0.5 to 5.0 μm. It is also preferred that 80 to 99.9%, more preferably 85 to 99.9%, and especially 90 to 99.9% by number of the vermiculite platelets have a particle size in the range 0.1 to 5.0 μm. The mean particle size (by which is meant the mean value of the maximum width of the platelets) of vermiculite platelets is preferably 1.0 to 3.0 μm, more preferably 1.2 to 2.2 μm, and especially 1.3 to 1.6 μm. It is also preferred that the vermiculite platelets have a thickness in the range from approximately 10 to 60 A, especially from approximately 25 to 40 A. In addition, it is preferred that from 60 to 100%, more preferably from 70 to 99%, and particularly from 90 to 95% by number of vermiculite platelets have a thickness in the range 10 to 60 A. The mean thickness of vermiculite platelets is preferably 25 to 50 A, more preferably 25 to 40 A, and especially 25 to 30 A.

Although the coating layer can comprise a substantially continuous layer of platelets of any practical thickness, suitably up to 5 μm, preferably up to 2 μm, and more preferably up to 0.2 μm, coated films exhibiting desired properties, for example surprisingly improved barrier property against atmospheric oxygen, comprise a substantially continuous layer of platelets at very low thicknesses, eg as low as 0.01 μm, especially in the range from 0.02 μm to 0.2 μm, and particularly in the range from 0.025 μm to 0.1 μm.

The layer mineral, preferably vermiculite, suitably comprises greater than 10% and less than 90%, preferably greater than 20% and less than 80%, more preferably greater than 30% and less than 75%, particularly greater than 40% and less than 70%, and especially greater than 50% and less than 70% by weight of the dry coating layer.

In a preferred embodiment of the invention the coating layer additionally comprises at least one arterial which may be any polymer known in the art to be capable of forming a continuous, preferably uniform coating. The polymeric arterial is preferably an organic resin and may be any film-forming polymeric or oligomeric species or precursor therefor that assists in forming a film of the vermiculite platelets and does not disrupt the film-forming capability thereof.

Suitable polymeric resins include:

(a) "aminoplast" resins which can be prepared by the interaction of an amine or amide with an aldehyde, typically an alkoxylated condensation product of melamine and formaldehyde, eg hexamethoxymethylmelamine, trimethoxy trimethylol melaminne formaldehyde;

(b) homopolyesters, such as polyethylene terephthlate;

(c) copolyesters, particularly those derived from a sulpho derivative of a dicarboxylic acid such as sulphoterephthalic acid and/or sulphoisophthalic acid;

(d) copolymers of styrene with one or more ethylenically unsaturated comonomers such as maleic anhydride or itaconic acid, especially the copolymers described in GB-A-1540067;

(e) copolymers of acrylic acid and/or methacrylic acid and/or their lower alkyl (up to 6 carbon atoms) esters, eg copolymers of ethyl acrylate and methyl methacrylate, copolymers of methyl methacrylate/butyl acrylate/acrylic acid typically in the molar proportions 55/27/18% and 36/24/40%;

(f) copolymers of styrene/acrylamide, particularly of the type described in GB-A-1174328 and GB-A-1134876;

(g) functionalised polyolefins, especially maleinised polybutadiene;

(h) cellulosic materials such as nitrocellulose, ethylcellulose and hydroxyethylcellulose; and

(i) polyvinyl alcohol.

A preferred polymeric resin component of the coating layer comprises an acrylic or methacrylic resin, preferably thermoset and preferably comprising a polymer comprising at least one monomer derived from an ester of acrylic acid and/or an ester of methacrylic acid, especially an alkyl ester of (meth)acrylic acid where the alkyl group contains up to ten carbon atoms such as methyl, ethyl, n-propyl, isopropyl, n-butyl, isobutyl, terbutyl, hexyl, 2-ethylhexyl, heptyl, and n-octyl. The acrylic resin preferably comprises greater than 50 mole %, and preferably less than 98 mole %, especially from 70 to 96 mole %, and particularly from 80 to 94 mole % of at least one monomer derived from an ester of acrylic acid and/or an ester of methacrylic acid, and/or derivatives thereof. Polymers derived from an alkyl acrylate, for example ethyl acrylate and butyl acrylate, together with an alkyl methacrylate are preferred. Polymers comprising ethyl acrylate and methyl methacrylate are particularly preferred The acrylate monomer is preferably present in a proportion in the range 30 to 65 mole %, and the methacrylate monomer is preferably present in a proportion in the range of 20 to 60 mole %.

A preferred acrylic resin, derived from 3 monomers comprises 35 to 60 mole % of ethyl acrylate/ 30 to 55 mole % of methyl methacrylate/2-20 mole % of methacrylamide, and especially comprising approximate molar proportions 46/46/8% respectively of ethyl acrylate/methyl methacrylate/acrylamide or methacrylamide, the latter polymer being particularly effective when thermoset for example, in the presence of about 25 weight % of a methylated melamine-formaldehyde resin. The acrylic resin is preferably present in the coating layer in the range from 0.5 to 50% by weight of the coating layer.

In another preferred embodiment of the invention the coating layer is formed from a composition comprising a cross-linking agent, by which is meant a arterial which reacts chemically to form a resin during formation of the coating layer, preferably forming covalent bonds, both with itself and with the surface of the underlying primer layer to form cross-links thereby improving adhesion thereto. The cross-linking agent is suitably an organic arterial, preferably a monomeric and/or oligomeric species, and particularly monomeric, prior to formation of the coating layer. The molecular weight of the cross-linking agent is preferably less than 5000, more preferably less than 2000, especially less than 1000, and particularly in the range from 250 to 500. Additionally, the cross-linking agent should preferably be capable of internal cross-linking in order to provide protection against solvent penetration. Suitable cross-linking agents may comprise epoxy resins, alkyd resins, amine derivatives such as hexamethoxymethyl melamine, and/or condensation products of an amine, eg melamine, diazine, urea, cyclic ethylene urea, cyclic propylene urea, thiourea, cyclic ethylene thiourea, aziridines, alkyl melamines, aryl melamines, benzo guanamines, guanamines, alkyl guanamines and aryl guanamines, with an aldehyde, eg formaldehyde. A preferred cross-linking agent is the condensation product of melamine with formaldehyde. The condensation product may optionally be alkoxylated. A catalyst is also preferably employed to facilitate cross-linking action of the cross linking agent. Preferred catalysts for cross-linking melamine formaldehyde include para toluene sulphonic acid, maleic acid stabilised by reaction with a base, and morpholinium paratoluene sulphonate.

The coating layer suitably comprises greater than 10% and less than 90%, preferably greater than 20% and less than 80%, more preferably greater than 25% and less than 70%, particularly greater than 30% and less than 60%, and especially greater than 30% and less than 50% by weight of the layer of a resin derived by cross-linking the cross-linking agent.

The molecular weight of polymeric resin of the coating layer can vary over a wide range but the weight average molecular weight is preferably less than 2,000,000, more preferably within the range 10,000 to 1,000,000, and particularly within the range 15,000 to 500,000.

The coating layer is formed by applying the layer mineral platelets as a slurry or dispersion and removing the dispersion medium to form a coherent layer. Preferably, the dispersion medium comprises water and the slurry or dispersion comprises between 0.5% and 20%, more especially between 1% and 10%, by weight of the layer mineral platelets.

The coating layer composition may be applied before, during or after the stretching operation in the production of an oriented film. The coating layer composition may, for example, be applied to the film substrate between the two stages (longitudinal and transverse) of a thermoplastics film biaxial stretching operation. Such a sequence of stretching and coating may be suitable for the production of a coated linear polyester film substrate, which is preferably firstly coated with the primer layer composition, stretched in the longitudinal direction over a series of rotating rollers, coated with the coating layer composition, and then stretched transversely in a stenter oven, preferably followed by heat setting. The coating layer composition is preferably applied to an already oriented film substrate, such as a biaxially oriented polyester, particularly polyethylene terephthalate film, which is preferably subjected to heating.

The temperature to which the coated film is heated depends, inter alia on the composition of the polymeric substrate. A coated polyester, especially polyethylene terephthalate, substrate is suitably heated from 100°C to 240°C, preferably from 160°C to 220°C, in order to dry the aqueous medium, or the solvent in the case of solvent-applied compositions, and for any cross-linking of the layer to occur and also to assist in coalescing and forming the coating into a continuous and uniform layer. In contrast, a coated polyolefin, especially polypropylene, is suitably heated in the range 85°C to 95°C.

The coating layer composition is preferably applied to the primer layer by any suitable conventional technique such as dip coating, bead coating, reverse roller coating or slot coating.

The coating layer is preferably applied to the primer layer at a coat weight within the range 0.25 to 100 mgdm$^{-2}$, more preferably 0.5 to 40 mgdm$^{-2}$, especially 1.0 to 20.0 mgdm$^{-2}$. For a substrate coated on both sides with a primer layer, and both primer layers coated with a coating layer, each coating layer preferably has a coat weight within the preferred range.

An additional overcoat layer may be applied to the coating layer. The overcoat layer may comprise any suitable film-forming polymeric resin, such as those described herein for use as the polymeric resin component of the coating layer.

Polymeric films as described herein are suitable for use as a packaging film, particularly when laminated with a polyethylene film as an overcoat layer. The polyethylene film is preferably adhered to the coating layer of a polymeric film by means of an intermediate adhesive, particularly polyurethane, layer.

One or more of the layers of a polymeric film according to the invention, ie substrate, primer, coating and/or overcoat layer(s), may conveniently contain any of the additives conventionally employed in the manufacture of polymeric films. Thus, agents such as dyes, pigments, voiding agents, lubricants, anti-oxidants, anti-blocking agents, surface active agents, slip aids, gloss-improvers, prodegradants, ultra-violet light stabilisers, viscosity modifiers and dispersion stabilisers may be incorporated in the substrate and/or coating layer(s), as appropriate. In particular, a substrate may comprise a particulate filler, such as silica, of small particle size. Desirably, a filler, if employed in a substrate layer, should be present in a small amount, not exceeding 0.5%, preferably less than 0.2%, by weight of the substrate.

The invention is illustrated by reference to the accompanying drawings in which :

Figure 1 is a schematic sectional elevation, not to scale, of a polymeric film having a substrate, primer and coating layers.

Figure 2 is a similar schematic elevation of a film as shown in Figure 1, with an additional overcoat layer on the remote surface of the coating layer.

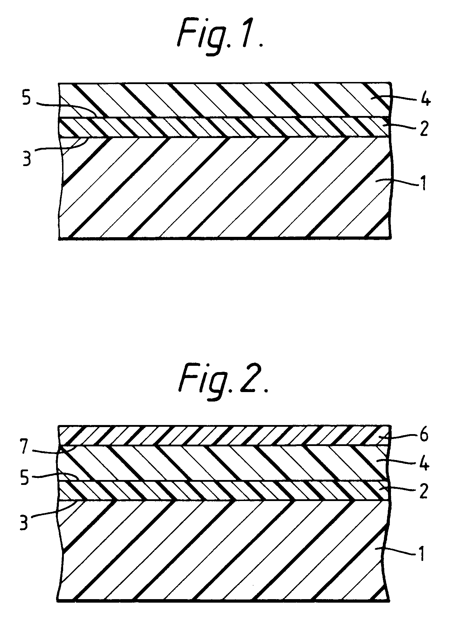

Referring to Figure 1 of the drawings, the film comprises a polymeric substrate layer (1) having a primer layer (2) bonded to one surface (3) thereof, and a coating layer (4) bonded to the remote surface (5) of the primer layer.

The film of Figure 2 further comprises an additional overcoat layer (6), bonded to the remote surface (7) of the coating layer (4).

The invention is further illustrated by reference to the following examples.

The following test procedures were used.

Adhesion Test

The adhesion of the coating layer to the substrate, or of the coating layer to the primer layer and the primer layer to the substrate was measured using the following method. Two strips of adhesive tape were attached to the coating layer of a film by rubbing up and down three times on the back of the tape. The first strip of adhesive tape was slowly peeled back at 180° to the peel edge (= slow pull). The second strip of adhesive tape was removed by pulling rapidly directly from the film surface (= fast pull). The film sample was then viewed over a light box and the amount of coating removed was assessed as good (= no visible coating damage), fair (= some coating damaged), and poor (= majority of coating removed).

Oxygen Barrier

Oxygen permeability of a film was measured using a Mocon 1050 (Modern Controls Inc.) test instrument. A film sample was placed in the machine with the nitrogen carrier gas flowing both above and below the film, in order that a background reading can be obtained. The nitrogen above the film was replaced by oxygen, and the amount of oxygen able to permeate through the film was measured in a carrier gas by using a sensor.

Example 1

This is a comparative example not according to the invention.

A vermiculite suspension was prepared in accordance with the following method:

100 g of vermiculite ore (ex-Carolina, US) was refluxed with 1 litre of 1 N lithium citrate solution at 80°C for four hours and left at room temperature for five days. This resulted in the exchange of 45.3 mEq/100 g of lithium cations in the ore. The ion-exchanged vermiculite ore was washed 5 times with deionised water to remove the excess salts and left overnight to swell in a large volume (ie 10 times the volume of vermiculite) of deionised water. The swollen vermiculite was milled for 40 minutes in a Greaves high-shear mixer at 7200 rpm to produce a suspension of vermiculite platelets. The platelet suspension was then sieved by passing through a mechanically agitated filter having a pore size of 106 $\mu$m.

A polyethylene terephthalate film was melt extruded, cast onto a cooled rotating drum and stretched in the direction of extrusion to approximately 3 times its original dimensions. The film was passed into a stenter oven, where the film was stretched in the sideways direction to approximately 3 times its original dimensions. The biaxially stretched film was heat set at a temperature of about 220°C by conventional means. Final film thickness was 23 $\mu$m.

The biaxially oriented polyethylene terephthalate film was coated on one side using a gravure coater, with a coating layer composition comprising the following ingredients:

| | |
|---|---|
| Vermiculite | 16 l |
| (7.5% w/w aqueous dispersion) | |
| | |
| Cymel 385 | 800 ml |
| (melamine formaldehyde of molecular weight 348) | |
| | |
| Para toluene sulphonic acid | 100 ml |
| (10% w/w aqueous solution) | |
| | |
| Synperonic NP 10 | 150 ml |
| (10% w/w aqueous solution of a nonyl phenol | |
| ethoxylate, supplied by ICI) | |
| | |
| Demineralised water | to 20 litres |

The coated film was dried at 180°C, and the dry coat weight of the coating layer was approximately 2 mgdm$^{-2}$. The thickness of the coating layer was approximately 0.1 μm.

The adhesion of the coating layer to the substrate was measured using the adhesion test described above and scored "good" for both the slow and fast pull.

The oxygen barrier property was determined for the coated film by measuring the oxygen permeability which was 9.5 cc/m$^2$/day. The oxygen permeability of uncoated polyethylene terephthalate film was also measured and found to be 50.0 cc/m$^2$/day.

Example 2

The procedure of Example 1 was repeated except that the biaxially oriented polyethylene terephthalate film was first coated on one side with a primer layer medium. The primer layer medium stock solution contains 50% by weight of a polymer comprising styrene/ethyl hexyl acrylate/methacrylic acid/n-butoxymethyl acrylamide in a weight % ratio of 30.9/38.9/2.1/28.1, in a 19/78/3 by weight % solvent mixture of n-butanol/toluene/xylene. Prior to coating, the primer layer medium stock solution was diluted to 4% by weight with isopropyl alcohol, and 6% by weight of the polymer, of sulphuric acid was added. The primer layer medium was coated using a gravure coater. After coating, the film was dried in a hot air oven maintained at 90°C to yield a film having a primer layer dry coat weight of 1.0 mgdm$^{-2}$ and thickness of approximately 0.1 μm.

The primer layer coated polyethylene terephthalate film was then coated on top of the primer layer with the coating layer composition as described in Example 1.

The adhesion of the coating layer to the primer layer and the primer layer to the substrate was measured using the adhesion test described above and scored "good" for both the slow and fast pull.

The oxygen barrier property of the film was determined by measuring the oxygen permeability which was 0.5 cc/m$^2$/day.

Example 3

The procedure of Example 2 was repeated except that the coating layer composition did not contain any Cymel 385 or para toluene sulphonic acid.

The oxygen barrier property of the film was determined by measuring the oxygen permeability which was 2.7 cc/m$^2$/day.

The above examples illustrate the improved oxygen barrier properties of polymeric films according to the present invention.

## Claims

1. A polymeric film comprising a substrate layer of polymeric material having on at least one surface thereof an acidic primer layer, the remote surface of said primer layer having thereon a coating layer comprising a layer mineral.

2. A polymeric film according to claim 1 wherein the primer layer comprises a polymer containing at least one free functional acid group.

3. A polymeric film according to claim 2 wherein the at least one free functional acid group is selected from carboxyl and sulphonic acid groups.

4. A polymeric film according to any one of the preceding claims wherein the primer layer is formed from a composition comprising a polymer and an additional acidic component.

5. A polymeric film according to claim 4 wherein the additional acidic component is selected from sulphuric acid, nitric acid, acetic acid and/or hydrochloric acid.

6. A polymeric film according to any one of the preceding claims wherein the primer layer comprises a copolymer comprising acrylamide and/or a derivative thereof and/or methacrylamide and/or a derivative thereof, and at least one other ethylenically unsaturated comonomer copolymerisable therewith.

7. A polymeric film according to any one of the preceding claims wherein the layer mineral comprises platelets of a film-forming, 2:1 phyllosilicate.

8. A polymeric film according to claim 7 wherein the 2:1 phyllosilicate comprises vermiculite.

9. A polymeric film according to any one of the previous claims wherein the coating layer additionally comprises a resin derived from a cross-linking agent.

10. A method of producing a polymeric film by forming a substrate layer of polymeric material, applying to at least one surface thereof an acidic primer layer, and applying to the remote surface of said primer layer a coating layer comprising a layer mineral.

Fig.1.

Fig.2.

**European Patent Office**

## EUROPEAN SEARCH REPORT

Application Number

EP  92 30 5329

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 463 740 (IMPERIAL CHEMICAL INDUSTRIES PLC)<br>* claims 1,7,9-13 *<br>* page 3, line 24 - page 3, line 31 *<br>* page 5, line 18 - page 5, line 26 *<br>* example 10 * | 1-10 | C08J7/04<br>C09D7/12<br>C09D133/00 |
| D,Y | GB-A-1 134 876 (IMPERIAL CHEMICAL INDUSTRIES LIMITED)<br>* claims 1-10,19 *<br>* page 2, line 85 - page 2, line 103 *<br>* page 3, line 4 - page 3, line 73 *<br>* example 4 * | 1-3,6-8, 10 | |
| Y | EP-A-0 282 212 (IMPERIAL CHEMICAL INDUSTRIES PLC)<br>* claims 1-12 *<br>* column 4, line 57 - column 5, line 38 * | 1-3,6-8, 10 | |
| A | EP-A-0 087 889 (IMPERIAL CHEMICAL INDUSTRIES PLC)<br>* claims 1-3 *<br>* page 8, line 24 - page 8, line 31 *<br>* page 9, line 11 - page 10, line 4 * | 1,7-9 | TECHNICAL FIELDS SEARCHED (Int. Cl.5)<br><br>C08J<br>C09D |

The present search report has been drawn up for all claims

| Place of search | Date of completion of the search | Examiner |
|---|---|---|
| THE HAGUE | 01 OCTOBER 1992 | HALLEMEESCH A.D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P0401)